# EUROPEAN PATENT SPECIFICATION

(11) **EP 4 232 722 B1**
(45) Date of publication and mention of the grant of the patent: **04.09.2024**
(21) Application number: 21801631.9
(22) Date of filing: 15.10.2021
(51) Int. Cl.: F16B 31/02, B25B 23/14, G01L 5/24, G01L 5/00, G01N 29/07, G01N 29/24, G01N 29/032, G01N 29/04

(54) **A SENSORIZED CLAMPING ELEMENT**
SENSORISIERTES KLEMMELEMENT
ÉLÉMENT DE SERRAGE MUNI D'UN CAPTEUR

(30) Priority: 22.10.2020 IT 202000024937
(43) Date of publication of application: 30.08.2023
(73) Proprietor: Tokbo S.r.l., 20837 Veduggio con Colzano (MB) (IT)
(72) Inventor: VILLA, Matteo, 20837 Veduggio con Colzano MB (IT); ORNAGHI, Davide, 20837 Veduggio con Colzano MB (IT); BONIOLO, Ivo Emanuele Francesco, 20837 Veduggio con Colzano MB (IT)
(74) Representative: Novagraaf Technologies
(86) International application number: PCT/IB2021/059495
(87) International publication number: WO 2022/084813

(56) References cited:
- WO-A1-2017/108051
- DE-U1- 202007 007 219
- US-A- 5 220 839
- US-B1- 8 521 448

## Description

### Field of the invention

The present invention finds application in the field of clamping elements such as, for example, screws and bolts. More in detail, the invention relates to clamping elements with sensors for monitoring the clamping state, as defined in the preamble of claim 1.

### State of the art

Clamping elements are used for a variety of applications. Exemplary, nonlimiting uses are in vehicles, buildings, infrastructure facilities, shipbuilding, hydraulics, plants.

Appropriate clamping conditions are generally required to ensure the safety of the system in which the clamping elements are provided, and to prevent the risk of detachment of fixed or movable parts, especially when under stress. In addition to proper initial installation of the necessary elements, it should be important to monitor that the clamping conditions do not deteriorate over time.

The prior art document EP 2339310 discloses a system for measuring the active clamping force on a screw by means of an ultrasound sensor. The sensor, of piezoelectric type, is mounted to the screw head, and as soon as it is electrically energized it transmits ultrasound along the screw. Ultrasound is reflected at the opposite end of the screw and is collected again by the sensor which converts the ultrasound back into an electrical signal, with some delay caused by the transmission of ultrasound between the two ends of the screw.

The measured delay is used to determine the length of the screw, which is related to the applied clamping force. That is, stronger tightening of a nut on the screw that incorporates the sensor causes the screw length to be increased and as a result the time of flight of ultrasound is also increased.

WO 2017108051 discloses another example of a screw equipped with an ultrasonic transducer. The transducer includes at least the power supply, a transducing element and a communication interface. Additional optional parts can be included in the same transducer, attached to it, or included in an external unit.

### Summary of the invention

One object of the present invention is to provide a clamping element that affords simple assembly, use and maintenance. Another object of the invention is to provide central management of the measured data even from a large number of clamping elements.

These and other objects are fulfilled by a clamping element and a monitoring system as defined in any of the accompanying claims.

In particular, according to the invention, the ultrasound sensor is fixed to a flat base surface of a clamping body, such as a screw, from which ultrasound can propagate until they reach another parallel base surface, whereby they are reflected. A practical cover element may be affixed and removed to and from the clamping body and is equipped with units that assist and manage the operation of the sensor. Namely, a power supply, an electronic control unit, and a communication module, preferably in wireless form, are provided.

The removable form of the power supply, the controller and the communication module simplifies system recharging, as well as maintenance, replacement or reprogramming of these components, without having to remove the entire clamping element from its operating position. Furthermore, upon removal of the cover element, tightening of the clamping body is simplified.

The communication module allows the detected information to be sent out, so that a single processor can interface with many clamping elements at the same time and provide a complete picture of the clamping state of an entire system.

In the preferred embodiment a memory unit is also provided, which is fixed to the sensor and is not removed from the clamping body with the cover element. This memory may advantageously store identification data and specific parameters of the clamping body. Therefore, even in case of accidental exchange of the cover elements of different clamping elements, the information transmitted by the communication module will always uniquely identify the clamping body from which the information originates.

The specific parameters of the clamping body also account for the possible construction differences of the various clamping bodies, intentionally introduced or caused by construction tolerances. For example, different lengths of two clamping bodies will cause different ultrasound transmission times, which will significantly affect measurement of the clamping force. Therefore, preferred specific parameters stored in the memory will include calibration data that enable associating the clamping force with the values of the measured quantity. Storing this data in a memory that is fixed to the sensor, and not in the cover element, will prevent measurement errors that would otherwise occur in the case of exchange of cover elements of different clamping bodies.

In particularly advantageous embodiments, additional sensors may be integrated in the cover element or directly on the clamping body, so that the signal transmitted out will provide information about a package of physical quantities acquired in particular locations of the system.

Further characteristics and advantages of the invention will be recognizable by a skilled person from the following detailed description of exemplary embodiments of the invention.

### BRIEF DESCRIPTION OF FIGURES

The accompanying figures show, by way of example and without limitation, examples that will be useful to understand some embodiments of the invention, and in particular:

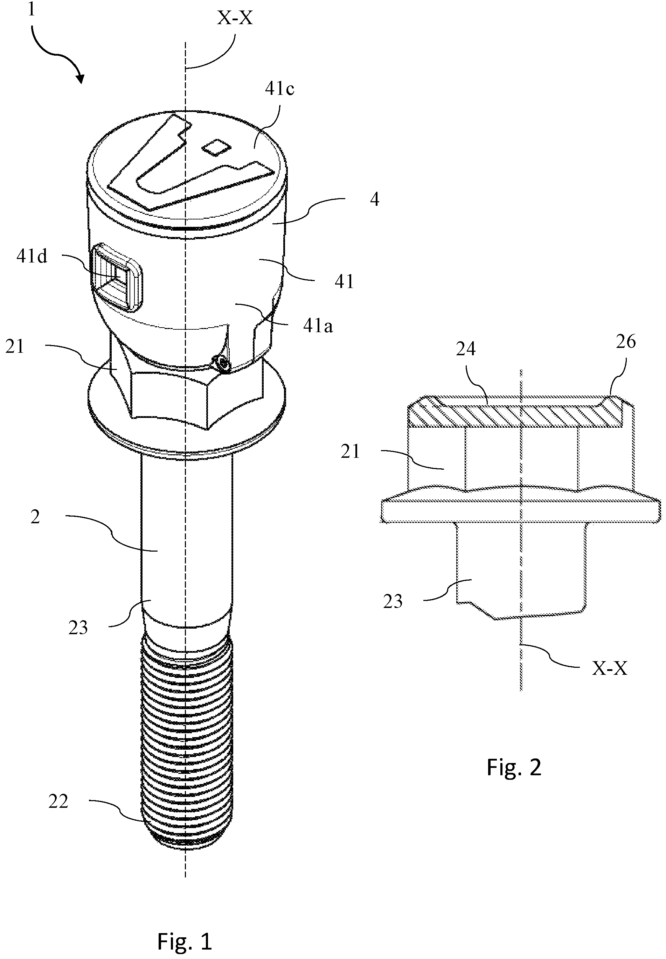

- Figure 1 shows a perspective view of a clamping element according to one embodiment of the invention,
- Figure 2 shows a sectional front view of a detail of a clamping body of the clamping element of Figure 1,
- Figures 3 and 4 show a perspective view and a front view of the clamping body and of some parts of a measurement module of the clamping element of Figure 1,
- Figures 5 and 6 show a partially sectional perspective view and a bottom view of a cover element and of the measurement module of the clamping element of Figure 1 but, just for simplicity of visualization, without the clamping element,
- Figures 7 and 8 show top and bottom views of an electronic board included in the cover element of the clamping element of Figure 1,
- Figures 9, 10 and 11 show an electronic board included in the measurement module of the clamping element of figure 1, in a top view and in two bottom views, before and after fixing of an ultrasound sensor, and
- Figure 12 schematically shows a control system according to one embodiment of the invention.

### DETAILED DESCRIPTION

The figures show a clamping element, generally designated by numeral 1.

The clamping element 1 comprises a clamping body 2 having a mechanical clamping function, alone or in cooperation with other complementary clamping bodies (not shown) which may be provided together or separately from the clamping element 1. For example, the clamping body 2 of the clamping element 1 may be a screw, and clamping may be ensured by cooperation with another clamping body, i.e. a nut.

The term clamping body 2 particularly refers to a body formed in a single piece, which may have additional components fixed thereto as explained below.

The clamping body 2 has a first end portion 21 which preferably defines a head of the clamping body 2.

The clamping body 2 also has a second end portion 22 spaced apart from the first end portion 21 along a longitudinal direction X-X.

The clamping body 2 comprises a stem 23 fixed to the head, which mainly extends in longitudinal direction X-X between the first and second end portions 21, 22. Preferably, the second end portion 22 defines a free end of the stem 23.

Also, the stem 23 can be at least partially formed with threads or have no threads at all. It should be noted that the invention is particularly advantageous for any type of clamping body 2 whose stem 23 can be lengthened or shortened when subjected to appropriate forces, such as the clamping force applied by a nut.

The first end portion 21 has a first flat base surface 24, and the second end portion 22 has a second flat base surface 25. The first and second base surfaces 24, 25 are parallel to each other, spaced apart in the longitudinal direction X-X, and are transverse to the longitudinal direction X-X, preferably perpendicular thereto.

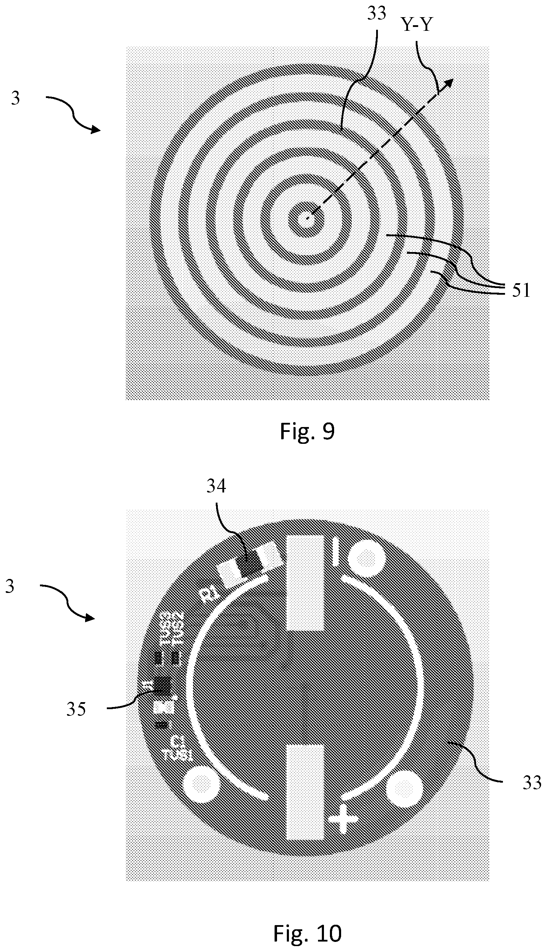

A measurement module 3 (see Figures 9-11) is fixed to the first base surface 24, i.e. preferably but without limitation the one that identifies the head of the clamping body 2.

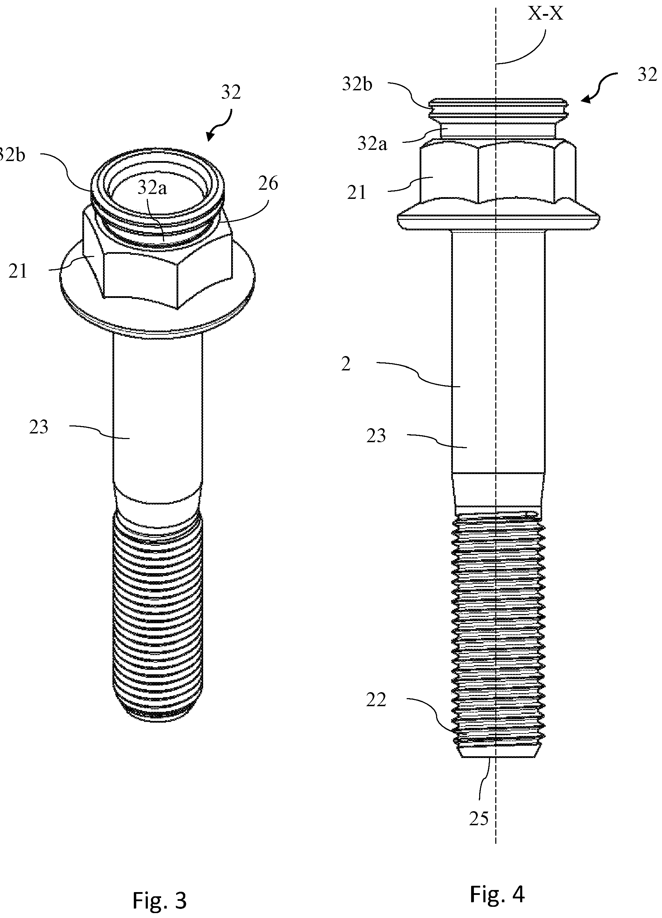

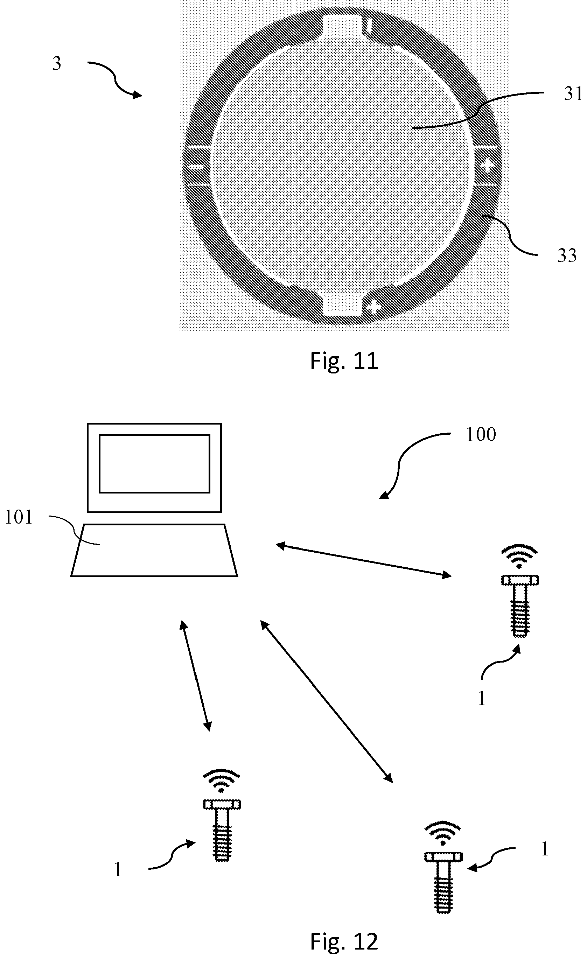

The measurement module 3 comprises an ultrasound sensor 31. In the embodiment shown in Figures 9-11, the ultrasound sensor 31 is basically disk-shaped, transverse to the longitudinal direction X-X. Also, the measurement module 3 comprises a support 32, here with an annular shape, which has the ultrasound sensor 31 fixed thereto. Nevertheless, for simplicity, in some figures the support 32 (e.g. Figures 3 and 4) is shown separate from the sensor 31 (e.g. Figure 11).

In particular, the ultrasound sensor 31 is in surface contact with the first base surface 24 and is preferably mechanically connected thereto in a substantially permanent manner, as is the entire measurement module 3. For example, such mechanical connection may be obtained by interposing an adhesive between the base surface 24 and the sensor 31. The viscosity of the adhesive in use may be selected by the skilled person in view of optimizing the transmission of ultrasound with the clamping body 2.

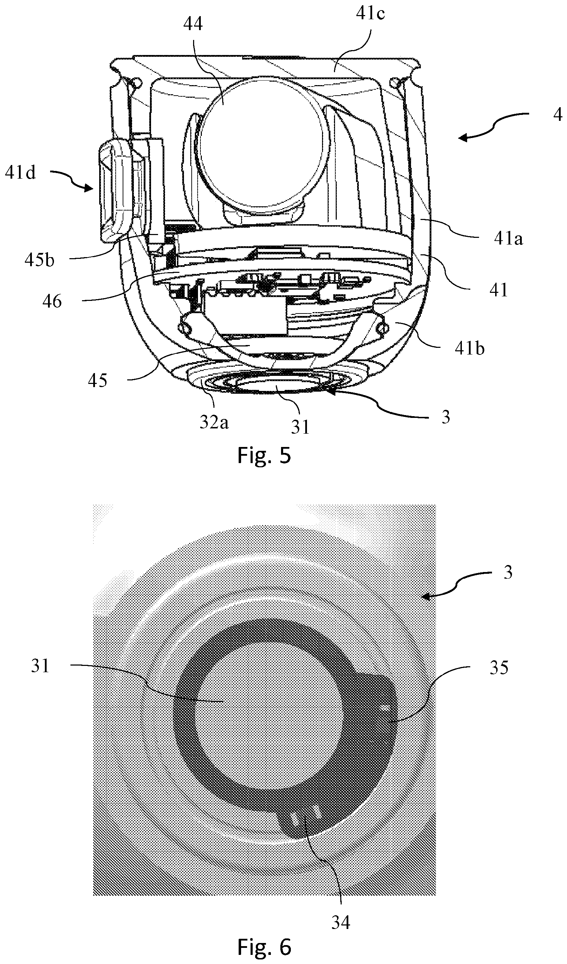

Nevertheless, just for simplicity visualization but not according to the invention, various figures, such as figure 5 and 6, show the sensor 31 separate from the clamping body 2. The ultrasound sensor 31 is configured to generate, transmit and collect ultrasonic vibrations. For example, the ultrasound sensor 31 may include a piezoelectric transducer configured to generate ultrasound when electrically driven to resonance, and to generate an electrical signal when it receives ultrasound.

Such ultrasound propagates from the sensor 31 to the first base surface 24, and then into the clamping body 2. A significant proportion of ultrasound travels along the stem 23 to the second base surface 25, where it is effectively reflected due to the flat geometry of the latter. Then, the ultrasound travels through the stem 23 until it reaches the first end portion 21 again and in particular the first base surface 24, where it is collected by the ultrasound sensor 31.

Thus, the ultrasound sensor 31 is able to measure a first physical quantity of the clamping body 2. The result of the measurement may be simply given by the electrical signal generated by the piezoelectric transducer. In this case, the signal will be interpreted by an independent controller, as described below. Alternatively, the measurement module 3 may comprise electronic components that are able to at least convert such electrical signal into a numerical value, which represents the result of the measurement and may be in any case further processed in an electronic control unit.

In the illustrated embodiment, the measurement module 3 comprises an electronic board 33, which can be configured to perform one or more of the above-mentioned processing operations, and/or to support some of the additional elements of the measurement module 3 as described below, and/or to route the measurement signal of the ultrasound sensor 31, as detailed below. The ultrasound sensor 31 is connected to the electronic board.

The electronic board 33 is shown in disk form and is fixed in the support 32. More in detail, the support 32 has a narrower first annular portion 32a which surrounds the ultrasound sensor 31, and a wider second annular portion 32b which surrounds the electronic board 33. The electronic board 33 is shown in Figures 9-11, in which the support 32 has been omitted.

In the example of the figures, the first end portion 21 of the clamping body 2 is shown with a rib 26 surrounding the first base surface 24. The rib 26 projects out of the first base surface 24 in the longitudinal direction X-X. Therefore, the first base surface 24 constitutes the bottom of a recess in the first end portion 21.

Preferably, the measurement module 3 is at least partially accommodated within said recess. In detail, the first annular portion 32a of the support 32 may be at least partly surrounded by the rib 26 of the clamping body 2.

Nevertheless, embodiments are also contemplated in which no part of the clamping body 2 protrudes longitudinally out of the base surface 24.

Processing of the result of the measurement by the electronic board 33 or by further units as described below, may generally lead to the identification of values of various physical quantities correlated with each other. At a first processing level the first physical quantity is given by a time of flight of ultrasound between the first and second base surfaces 24, 25 (round-trip). Appropriate processing may provide a longitudinal length of the clamping body 2 between the first and second base surfaces 24, 25, and therefore an elongation of the clamping body 2 with respect to a rest condition. The final quantity obtained in the preferred embodiment is a clamping force acting on the clamping body 2, that is the cause of its elongation.

The rest condition of the clamping body 2 refers to a condition in which no clamping force is applied. It should be noted that in various embodiments, for example when the clamping body 2 is made of a metal material, its length is not only influenced by the clamping force, but also by temperature. Therefore, the elongation of the clamping body 2 should be advantageously determined by comparing its current length with that in the rest condition at the same temperature.

For this purpose, the measurement module 3 preferably comprises a first temperature sensor 34. The first temperature sensor 34 faces the clamping body 2 and may be in contact therewith or spaced therefrom. The first temperature sensor 34 is configured to measure the temperature of the clamping body 2. In the illustrated embodiment, the first temperature sensor 34 is mounted to the electronic board 33, specifically on a face of the electronic board 33 that faces the clamping body 2.

According to the invention, the clamping element 1 comprises a cover element 4 that is designed to be removably affixed to the first end portion 21, i.e. the head of the clamping body 2, or equivalently to the measurement module 3. The measurement module 3 is preferably arranged between the clamping body 2 and the cover element 4. While reference will be made hereinafter to fixation or separation of the cover element 4 to or from the clamping body 2, it should be understood that such fixation or separation can be also referred to the measurement module 3.

By affixing the cover element 4 to the clamping body 2, at least one electric contact is established between one or more components of the measurement module 3 and one or more components of the cover element 4.

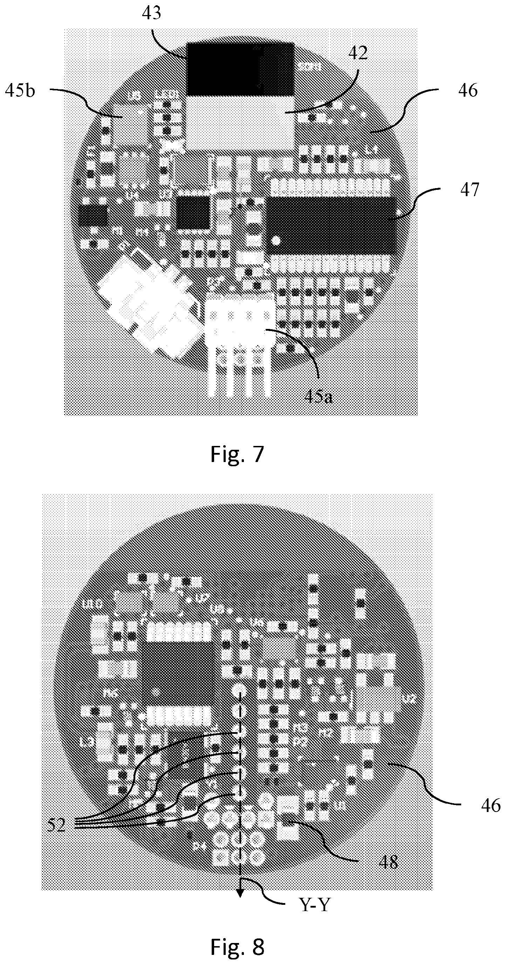

In the preferred embodiment, first contact elements 51 and second contact elements 52 (Figures 8 and 9) are included in the measurement module 3 and in the cover element 4 for this purpose. In one example, as shown in the figures, the first contact elements 51 are included in the measurement module 3 and the second contact elements 52 are included in the cover element 4. Nevertheless, a possible alternative option is that the first contact elements 51 will be included in the cover element 4, and the second contact elements 52 will be included in the measurement module 3.

Those of the first and second contact elements 51, 52 that are included in the measurement module 3, may be mounted, for example, to the electronic board 33, namely on a face of the electronic board 33 that faces away from the clamping body 2, i.e. toward the cover element 4.

Preferably, the electronic board 33 comprises an electric circuit, e.g. a printed circuit, which is configured to route the measurement signal of the first physical quantity from the ultrasound sensor 31 to the contact elements 51, 52 on the board 33.

The first and second contact elements 51, 52 are in electric contact with each other, when the cover element 4 is affixed to the first end portion 21 of the clamping body 2, and are separate from each other, when the cover element 4 is removed from the first end portion 21.

In the preferred embodiment, the first contact elements 51 comprise one or a plurality of conductive traces. These conductive traces are preferably circular, and in particular concentric with each other, around a common center, and are spaced apart from each other in a radial direction Y-Y, which is measured as a distance from the common center. Therefore, they have different radii.

In addition, the second contact elements 52 comprise one or a plurality of pins. The pins are arranged in radial positions corresponding to the conductive traces of the first contact elements 51. For example, they can be aligned with and radially spaced apart from each other with respect to the common center of the conductive traces. However, even with other spatial arrangements, in the condition in which the cover element 4 is affixed to the clamping body 2 the pins have different distances from the common center of the conductive traces.

As a result, each of the pins contacts a different conductive trace, regardless of the circumferential orientation angle of the cover element 4 with respect to the clamping body 2. Therefore, the clamping body 4 can rotate circumferentially relative to the clamping body 2 or rotate about a longitudinal axis of the clamping body X-X, without breaking the electrical contact between first and second contact elements 51, 52.

The cover element 4 comprises an essentially cap-shaped enclosure 41, which houses the functional units of the cover element 4 as described below.

The enclosure 41 can be removably affixed to the first end portion 21 of the clamping body 2, or equivalently to the measurement module 3. In the illustrated embodiment, the enclosure 41 has a substantially cylindrical shape and, when mounted to the clamping body 2, it entirely projects in the axial direction X-X beyond the first base surface 24, on the opposite side of the stem 23. In particular, the enclosure covers the measurement module 3.

The illustrated enclosure 41 comprises a shell 41a. According to a preferred aspect, the shell 41a has a first opening, to access those of the first and second connection elements 51, 52, that are included in the cover element 4.

Furthermore, the enclosure 41 comprises a restriction element 41b.

The restriction element 41b is designed to be locked to the shell 41a in a first position, and to move relative to the shell 41a between a first position and a second position. In the first position, the first opening of the shell 41a and the restriction element 41b are configured, together, to retain the measurement module 3, for example by engaging the first annular portion 32a and holding the second annular portion 32b within the enclosure 41. In the second position, the separation of the enclosure 41 from the measurement module 3 is permitted, and in particular the second annular portion 32b may extend through the first opening.

In addition, the illustrated enclosure 41 comprises a lid 41c. The first opening is formed in the shell 41a. The shell 41a also has a second opening for access to the interior of the enclosure 41. The lid 41c is movable relative to the shell 41a, to open and close the second opening.

In other embodiments alternative shapes, such as polygonal shapes, are allowed. Furthermore, the enclosure 41 may optionally at least partially enclose the head of the clamping body 2 for more stable fixation. Embodiments are also provided in which the enclosure 41 is fixed both to the head of the clamping body 2 and to the measurement module 3.

It should be noted that the enclosure 41, and more generally the cover element 4, is removable from the clamping body 2 without separating the measurement module 3 from the clamping body 2. Therefore, with the separation of the enclosure 41 from the clamping body 2, the connection of the ultrasound sensor 31 with any component of the cover element 4 housed in the enclosure 41 is also broken.

Nevertheless, for simplicity, as previously stated, Figures 5 and 6 show the enclosure 4 and the measurement module 3 fixed together, without the clamping body 2 fixed to the measurement module 3, a condition that is not contemplated in the invention and in particular in the preferred embodiments with the ultrasound sensor 31 glued to the first base surface 24.

Like the measurement module 3, the cover element 4 may comprise an electronic board 46 (as shown in Figures 7 and 8, and distinct from the electronic board 33), arranged in the enclosure 41, which may support the pins of the second connection elements 52, as well as one or more of the components as discussed below, and may electrically connect them to each other as appropriate.

The cover element 4 comprises a communication module 42, at least partly enclosed in the enclosure 41, for example mounted to the electronic board 46. The communication module 42 is configured to transmit the first physical quantity measured by the ultrasound sensor 31, in raw or processed form, optionally in combination with other information as described below, to an external device. The communication module 42 is preferably a wireless communication module, such as a Bluetooth module, preferably of Bluetooth Low Energy - BLE type, whereas the external device is a remote device.

In other embodiments, not shown, the communication module 42 is a connector for a data transmission cable. Optionally, both a wireless communication module and a connector for a data transmission cable can be provided in a single cover element 4.

A possible aspect of the invention relates to a monitoring system 100 which comprises one or more clamping elements 1 and a processor 101 in signal communication, preferably in wireless form, with the communication modules 42 of each clamping element 1. Advantageously, the processor 101 can collect the physical quantities measured in all the clamping elements 1, to provide a user with an overall display, or to launch an alarm signal when an anomaly is recognized, or to combine the data from the clamping elements 1 with information of other nature and origin concerning the mechanical system in which the clamping elements 1 are incorporated.

Referring back to the characteristics of a single clamping element 1, the cover element 4 comprises an electronic controller 43, which is also at least partially enclosed in the enclosure 41, for example mounted to the electronic board 46. When the cover element 4 is affixed to the clamping body 2, the controller 43 is connected to the ultrasound sensor 31 to receive the first physical quantity therefrom. In addition, the controller 43 is configured to command the ultrasound sensor to initiate a measurement of the first physical quantity. The controller 43 is also connected to the first temperature sensor 34 with similar methods and purposes.

It should be noted that, as used herein, when mention is made to components connected or in signal communication with each other, both direct and indirect connections, i.e. with the interposition of additional intermediate components are contemplated.

For example, in the illustrated embodiment, the cover element 4 comprises an analog conditioning circuit 47, mounted to the electronic board 46. The analog conditioning circuit 47 is circuitally interposed between the ultrasound sensor 31 and the electronic controller 43, namely between the first and/or second connection elements 51, 52 and the electronic controller 43.

The analog conditioning circuit 47 is configured to derive a measurement value of the first physical quantity from the measurement signal generated by the ultrasound sensor 31. The measured value is then provided by the analog conditioning circuit 47 to the electronic controller 43.

The controller 43 is also connected to the communication module 42 to route the measured value of the first physical quantity thereto and command transmission of the latter. The first physical quantity received from the ultrasound sensor 31 may be at least partly processed in the controller 43 or may be routed to the communication module 42 as received.

Via the communication module 42, the controller 43 can also exchange further information with the external processor 101, and receive in turn, for example, measurement initiation commands.

The cover element 4 comprises power supply means 44, at least partially enclosed in the enclosure 41. The power supply means 44 are connected to the communication module 42 and to the controller 43 to power them. Moreover, when the cover element 4 is fixed to the clamping body 2, the power supply means 44 are connected to the ultrasound sensor 31 to power it, directly or indirectly through the controller 43 or other components. Conversely, when the cover element 4 is separate from the clamping body 2, the ultrasound sensor 31 remains unenergized.

In the illustrated embodiment, the power supply means 44 comprise a battery, connected to the electronic board 46 by means of a power cable. The battery is, for example, clip-mounted.

The battery can be accessed and pulled out through the second opening of the shell 41a, when the second opening is not closed by the lid 41c. Therefore, replacement of the battery is advantageously possible even without removing the cover element 4 from the clamping body 2.

Instead of or in addition to the battery, the power supply means 44 may include a connector for a power cable, for cable powering.

The battery is preferable if continuous monitoring of many clamping elements 1 is desired, especially when the latter are placed in moving parts of a mechanical system, due to the lack of wires. Cable powering can however be satisfactory in case of stationary parts, or when measurements are carried out using a single cover element 4 with various clamping bodies 2, to provide a single measurement for each of them.

The arrangement of the communication module 42, the controller 43 and the power supply means 44 as parts of the cover element 4 makes them easily separable from the clamping body 2 and the ultrasound sensor 31, and easily re-applicable thereto. Thus, all the parts of the cover element 4 can be simply serviced, replaced or reconfigured, and especially without disassembling the clamping body 2 from its operating position in which it clamps at least one predetermined element of a mechanical system. This avoids the need to shut down the entire mechanical system due to the absence of the clamping body 2, each time maintenance has to be performed on the components of the cover element 4.

Conversely, the ultrasound sensor 31 should remain permanently affixed to the clamping body 2, to avoid repeated breaking and reestablishing of the mechanical connection between the two components, whose quality is important for proper ultrasound propagation.

In the preferred embodiment, the measurement module 3 comprises a first memory unit 35. The first memory unit 35 can be mounted for example to the electronic board 33 and is therefore fixed to the ultrasound sensor 31 and to the clamping body 2. It should be noted that, since the first memory unit 35 is incorporated in the measurement module 3, the cover element 4 can be separated from the clamping body 2 without separating the first memory unit 35 from the ultrasound sensor 31 or from the clamping body 2.

It should be also noted that, when the cover element 4 is fixed to the clamping body 2, the controller 43 and the supply means 44 are directly or indirectly in contact with the first memory unit 35, for purposes of power supply, control and information exchange.

The first memory unit 35 is distinct from a second memory unit 48 which can be included in the cover element 4 (for example mounted to the electronic board 46) and which supports the operation of the controller 43 as easily understood by the skilled person.

The first memory unit 35 is configured to store identification data of the clamping body 2. The identification data may include, for example, an alphanumeric code which, once transferred to the external processor 101 via the controller 43 and the communication module 42, allows the processor 101 to uniquely identify the clamping body 2, and hence to determine from which clamping body 2 the various measured and received physical quantities originate.

The first memory unit 35 is also configured to store specific parameters of the clamping body 2. The specific parameters comprise calibration data from which a plurality of clamping forces acting on the clamping body 2 can be determined based on a plurality of values of the first physical quantity.

Therefore, they be expressed, for example, in table form, as a curve which directly associates a clamping force value with each value of the first quantity. Alternatively, the calibration data may be one or more physical parameters describing the correlation between the first measured quantity and the clamping force under one or more predetermined conditions. For example, the calibration data may contain one or more lengths of the clamping body 2 with no clamping force applied and/or with the application of a predetermined clamping force. According to another example, the calibration data may contain a single length and one or more coefficients expressing the ratio of elongation to the clamping force. As an alternative to the length, the time of flight of ultrasound may be used in the above-mentioned clamping conditions.

In all the above cases, the calibration data are preferably acquired and stored in a calibration step on the clamping element 1. It should be noted that the specific parameters may also vary between clamping bodies 2 of the same production lot, and at least one specific measurement should be thus made for each clamping body 2.

Preferably, the calibration data are related to one or more predetermined temperatures. This is because temperature affects the dimensions of the clamping body 2, both at rest and under a certain clamping force, and therefore also affects the relationship between the first physical quantity (length of the clamping body 2 or ultrasound propagation time) and the clamping force.

In the most accurate embodiments, which require a longer and more complete calibration, the clamping force is stored in table form as a function of both the first physical quantity and the temperature.

On the other hand, should the temperature-dependent length variation be easily calculated with an acceptable degree of approximation, the only data to be stored is the data that connects the clamping force to the first physical quantity for a single temperature. Then the influence of the different temperature would be calculated separately, and the measured value of the first physical quantity would be corrected before associating it with a clamping force value.

Conversely, if the relationship between the first physical quantity and the clamping force were simple to calculate with adequate accuracy, only the data relating to a link between the first physical quantity and the temperature without the clamping force shall by stored. The clamping force would then be calculated based on the measured value of the first physical quantity when compared with the corresponding stored value for the current temperature.

Finally, should both dependences of the clamping force on the first physical quantity and on the temperature be easily predictable with a good precision, a single value of the first physical quantity need simply be stored as calibration data for a given temperature and for a given clamping force.

In the preferred embodiment, the controller 43 is configured to calculate the clamping force based on the measured value of the first physical quantity, the calibration data, and preferably the temperature. Then, the communication module 42 sends the value of the clamping force directly to the processor 101. Alternatively, the measured value of the first physical quantity is sent to the processor 101 before being converted into the clamping force, and the calibration data is also sent to the processor 101 so that it will be able to calculate the clamping force. A third possibility is that the calibration data of all the clamping bodies 2 resides in the processor 101 and the clamping element 1 only sends the first physical quantity and its identifier thereto.

If the influence of temperature is accounted for, a temperature measurement will be advantageously provided with the measurement of the first physical quantity. Thus, as discussed above, the measurement module 3 may comprise a first temperature sensor 34.

In the preferred embodiment, the cover element 4 comprises one or more sensors 45a, 45b in addition to the ultrasound sensor 31 and to the first temperature sensor 34 if any. The additional sensors 45a, 45b are configured to detect at least one second physical quantity of the clamping element 1.

It should be noted that the additional sensors 45a, 45b are at least partially enclosed in the enclosure 41, for example mounted to the electronic board 46. They are in communication with the controller 43, to receive measurement initiation commands therefrom and to provide measurement results thereto. Then, the measurements of each second physical quantity may be sent via the communication module 42 to the processor 101, like the first physical quantity.

In one embodiment, one of the second physical quantities as measured is still temperature, and therefore the cover element 4 comprises a second temperature sensor (not shown). This temperature measurement of the second temperature sensor may be added to, or replace, the temperature measurement by the first temperature sensor 34. Thus, when the first temperature sensor 34 is lacking, the second temperature sensor provides information about the temperature of the clamping body 2 that may be less accurate but still useful. On the other hand, if both temperature sensors are present, this additional temperature data may be used for temperature control purposes for electronic components such as the controller 43, the communication module 42 and the power supply means 44.

One more of the second physical quantities is given by the position of the clamping body 2, as measured by one or more position sensors 45a. The position sensor 45a may be an independent sensor, that is able to measure by itself the position of the clamping body 2 with respect to an initial position or a predetermined spatial reference, or may be a sensor in signal communication with the external processor 101 and/or with other devices that allow triangulation thereof with processes known to the skilled person.

In the latter case, as shown in the figures, the enclosure 41 may have a window 41d for transmission and reception of signals required for measuring the position by the position sensor 45a. The position sensor 45a faces the window 41d.

An additional physical quantity is given by the vibrational state of the clamping body 2, as measured by a vibration sensor. Yet one more second physical quantity is given by the inclination of the clamping body 2, as measured by an inclination sensor. In the illustrated embodiment, the vibration sensor and the inclination sensor are both incorporated in an inertial measurement unit 45b.

The monitoring system 100 benefits from the measurement of all these physical quantities. The system 100 according to one example may be placed on board a vehicle (not shown), and its processor 101 may be configured to control the measurement of the first physical quantity and/or of one or more of the second physical quantities in particular moments of the vehicle's travel.

One example of commands given by the processor 101 to the clamping element 1, i.e. to the controller 43, which routes the commands to the individual sensors, is as follows:
- with the vehicle stationary, a command is given to measure the position, inclination, temperature and clamping force of the clamping body 2;
- with the vehicle in motion, a command is periodically given, for example every 10 minutes, to measure the temperature and the vibrational state of the clamping body 2;
- upon specific user request, for example by video control, a measurement is initiated of the position, inclination, temperature and clamping force of the clamping body 2;
- in the event of a shock suffered by the vehicle, a command is given to measure the temperature and vibrational state of the clamping body 2.

A skilled person may obviously envisage a number of changes to the above discussed variants, without departure from the scope of the invention defined by the appended claims.

## Claims

1. A clamping element (1), comprising:
- a clamping body (2) formed in a single piece, the clamping body (2) having:
- a first end portion (21) with a first flat base surface (24),
- a second end portion (22) spaced apart from the first end portion (21) along a longitudinal direction (X-X), having a second base surface (25) flat and parallel to the first base surface (24),
- a stem (23), which mainly extends along said longitudinal direction (X-X) between the first and second end portions (21, 22),
- a measurement module (3) fixed to the first base surface (24), and comprising an ultrasound sensor (31) configured to generate, transmit and collect ultrasound traveling through the stem (23) between the first and second base surfaces (24, 25) to measure a first physical quantity of said clamping element (1),
**characterized in that it comprises** a cover element (4) adapted to be removably fixed to the measurement module (3) and/or the first end portion (21), the cover element (4) comprising:
- a communication module (42), in signal communication with said measurement module (3), configured to transmit said first physical quantity to an external device, that is external to said clamping element (1),
- a microcontroller (43) in signal communication with said measurement module (3) and with said communication module (42) to control the operation of said ultrasound sensor (3) and said communication module (42),
- power supply means (44) for supplying power to the ultrasound sensor (3), the communication module (42) and the microcontroller (43).

2. A clamping element (1) as claimed in claim 1, comprising first and second contact elements (51, 52), contained in part in the measurement module (3) and in part in the cover element (4), which are in electrical contact with each other when the cover element (4) is fixed to said first end portion (21), and are separated from each other when the cover element (4) is removed from the first end portion (21), wherein:
- the first contact elements (51) comprise at least conductive trace, and
- the second contact elements (52) comprise at least one pin for contacting the conductive trace, irrespective of a circumferential orientation angle of the cover element (4) relative to the clamping body (2).

3. A clamping element (1) as claimed in claim 2, wherein the first contact elements (51) comprise a plurality of concentric, radially spaced apart conductive traces, and the second contact elements (52) comprise a plurality of pins, arranged in radial positions corresponding to the conductive traces for contacting a different conductive trace each, irrespective of a circumferential orientation angle of the cover element (4) relative to the clamping body (2).

4. A clamping element (1) as claimed in any of claims 1 to 3, wherein:
said measurement module (3) comprises a first memory unit (34) configured to store identification data and/or specific parameters of the clamping body (2), and
- said cover element (4) comprises a second memory unit (48) in communication with said microcontroller (43).

5. A clamping element (1) as claimed in claim 4, wherein said specific parameters of the clamping body (2) stored in the first memory unit (34) comprise calibration data adapted for determining a plurality of clamping forces acting on the clamping body (2) as a function of a plurality of values of said first physical quantity.

6. A clamping element (1) as claimed in any of claims 1 to 5, wherein said first physical quantity comprises a time of flight of ultrasound between the first and second base surfaces (24, 25), and/or an elongation of the clamping body (2), and/or a clamping force acting on the clamping body (2).

7. A clamping element (1) as claimed in any of claims 1 to 6, wherein said measurement module (3) comprises a temperature sensor (34) facing the clamping body (2) for measuring the temperature of the clamping body (2).

8. A clamping element (1) as claimed in any of claims 1 to 7, wherein the cover element (4) comprises one or more additional sensors (45a, 45b) configured to detect at least one second physical quantity of the clamping element (1), preferably including at least one of temperature, position, vibrational state and tilt.

9. A clamping element (1) as claimed in any of claims 1 to 8, wherein the cover element (4) comprises an enclosure (41) that is removably fixable to the measurement module (3) and/or to the first end portion (21) of the clamping body (2), wherein the communication module (42), the microcontroller (43), the power supply means (44), and the optional additional sensors (45a, 45b) are at least partly enclosed in the enclosure (41).

10. A clamping element (1) as claimed in claim 9, wherein the enclosure (41) comprises a shell (41a), having an opening for accessing to at least the power supply means (44), and a movable lid (41c) for opening and closing the opening of the shell (41a).

11. A clamping element (1) as claimed in any of claims 1 to 10, wherein the ultrasound sensor (31) is in surface contact with the first base surface (24), preferably glued to the first base surface (24).

12. A clamping element (1) as claimed in any of claims 1 to 11, wherein the first end portion (21) defines a head of the clamping body (2), fixed to the stem (23), the cover element (4) being removably fixable to said head.

13. A clamping element (1) as claimed in any of claims 1 to 12, wherein said power supply means (44) comprise a battery and/or a connector for a power cable.

14. A clamping element (1) as claimed in any of claims 1 to 13, wherein said communication module (42) comprises a wireless communication module and/or a connector for a data transmission cable.

15. A monitoring system (100) for monitoring a physical quantity of a clamping element (1) comprising:
- one or more clamping elements (1) as claimed in any of claims 1 to 14, and
- a processor (101) in signal communication with the communication modules (42) of each clamping element (1), said processor being configured to make said physical quantity, or quantity derived therefrom, or derived from a combination of all the measured quantities, available to a user.

## Patentansprüche

1. Klemmelement (1), umfassend:
- einen einstückig ausgebildeten Klemmkörper (2), wobei der Klemmkörper (2) aufweist:
- einen ersten Endabschnitt (21) mit einer ersten flachen Basisoberfläche (24),
- einen zweiten Endabschnitt (22), der vom ersten Endabschnitt (21) entlang einer Längsrichtung (X-X) beabstandet ist und eine zweite Basisoberfläche (25) aufweist, die flach und parallel zur ersten Basisoberfläche (24) ist,
- einen Schaft (23), der sich hauptsächlich entlang der Längsrichtung (X-X) zwischen dem ersten und dem zweiten Endabschnitt (21, 22) erstreckt,
- ein Messmodul (3), das an der ersten Basisoberfläche (24) befestigt ist und einen Ultraschallsensor (31) umfasst, der konfiguriert ist, um Ultraschall, der sich durch den Schaft (23) zwischen der ersten und der zweiten Basisoberfläche (24, 25) bewegt, zu erzeugen, zu übertragen und zu erfassen, um eine erste physikalische Größe des Klemmelements (1) zu messen,
**dadurch gekennzeichnet, dass es umfasst:** ein Abdeckelement (4), das dazu ausgelegt ist, entfernbar an dem Messmodul (3) und/oder dem ersten Endabschnitt (21) befestigt zu werden, wobei das Abdeckelement (4) umfasst:
- ein Kommunikationsmodul (42), das in Signalverbindung mit dem Messmodul (3) steht und konfiguriert ist, um die erste physikalische Größe an eine externe Vorrichtung zu übertragen, die sich außerhalb des Klemmelements (1) befindet,
- einen Mikrocontroller (43), der in Signalkommunikation mit dem Messmodul (3) und mit dem Kommunikationsmodul (42) steht, um den Betrieb des Ultraschallsensors (3) und des Kommunikationsmoduls (42) zu steuern,
- Stromversorgungsmittel (44) zur Stromversorgung des Ultraschallsensors (3), des Kommunikationsmoduls (42) und des Mikrocontrollers (43).

2. Klemmelement (1) nach Anspruch 1, umfassend erste und zweite Kontaktelemente (51, 52), die teilweise im Messmodul (3) und teilweise im Abdeckelement (4) enthalten sind und die in elektrischem Kontakt miteinander stehen, wenn das Abdeckelement (4) an dem ersten Endabschnitt (21) befestigt ist, und voneinander getrennt werden, wenn das Abdeckelement (4) vom ersten Endabschnitt (21) entfernt wird, wobei:
- die ersten Kontaktelemente (51) mindestens eine Leiterbahn umfassen und
- die zweiten Kontaktelemente (52) mindestens einen Stift zur Kontaktierung der Leiterbahn aufweisen, unabhängig von einem Umfangsausrichtungswinkel des Abdeckelements (4) relativ zum Klemmkörper (2).

3. Klemmelement (1) nach Anspruch 2, wobei die ersten Kontaktelemente (51) eine Vielzahl konzentrischer, radial beabstandeter Leiterbahnen umfassen und die zweiten Kontaktelemente (52) eine Vielzahl von Stiften umfassen, die in radialen Positionen angeordnet sind, die den Leiterbahnen entsprechen, um jeweils eine andere Leiterbahn zu kontaktieren, und zwar unabhängig von einem Umfangsausrichtungswinkel des Abdeckelements (4) relativ zum Klemmkörper (2).

4. Klemmelement (1) nach einem der Ansprüche 1 bis 3, wobei:
das Messmodul (3) eine erste Speichereinheit (34) umfasst, die konfiguriert ist, um Identifikationsdaten und/oder spezifische Parameter des Klemmkörpers (2) zu speichern, und
- das Abdeckelement (4) eine zweite Speichereinheit (48) umfasst, die mit dem Mikrocontroller (43) kommuniziert.

5. Klemmelement (1) nach Anspruch 4, wobei die in der ersten Speichereinheit (34) gespeicherten spezifischen Parameter des Klemmkörpers (2) Kalibrierungsdaten umfassen, die zum Bestimmen einer Vielzahl von Klemmkräften geeignet sind, die auf den Klemmkörper (2) in Abhängigkeit einer Vielzahl von Werten der ersten physikalischen Größe wirkt.

6. Klemmelement (1) nach einem der Ansprüche 1 bis 5, wobei die erste physikalische Größe eine Laufzeit des Ultraschalls zwischen der ersten und der zweiten Basisoberfläche (24, 25) und/oder eine Dehnung des Klemmkörpers (2) und/oder eine auf den Klemmkörper (2) wirkende Klemmkraft umfasst.

7. Klemmelement (1) nach einem der Ansprüche 1 bis 6, wobei das Messmodul (3) einen dem Klemmkörper (2) zugewandten Temperatursensor (34) zum Messen der Temperatur des Klemmkörpers (2) aufweist.

8. Klemmelement (1) nach einem der Ansprüche 1 bis 7, wobei das Abdeckelement (4) einen oder mehrere zusätzliche Sensoren (45a, 45b) umfasst, die konfiguriert sind, um mindestens eine zweite physikalische Größe des Klemmelements (1) zu erkennen, die vorzugsweise mindestens eine der folgenden Größen umfasst: Temperatur, Position, Schwingungszustand und Neigung.

9. Klemmelement (1) nach einem der Ansprüche 1 bis 8, wobei das Abdeckelement (4) eine Ummantelung (41) aufweist, die entfernbar am Messmodul (3) und/oder am ersten Endabschnitt (21) des Klemmkörpers (2) befestigbar ist, wobei das Kommunikationsmodul (42), der Mikrocontroller (43), die Stromversorgungsmittel (44) und die optionalen zusätzlichen Sensoren (45a, 45b) mindestens teilweise in der Ummantelung (41) eingeschlossen sind.

10. Klemmelement (1) nach Anspruch 9, wobei die Ummantelung (41) eine Schale (41a) mit einer Öffnung für den Zugang zu mindestens den Stromversorgungsmitteln (44) und einen beweglichen Deckel (41c) zum Öffnen und Schließen der Öffnung der Schale (41a) umfasst.

11. Klemmelement (1) nach einem der Ansprüche 1 bis 10, wobei der Ultraschallsensor (31) in Oberflächenkontakt mit der ersten Basisoberfläche (24) steht, vorzugsweise an die erste Basisoberfläche (24) geklebt ist.

12. Klemmelement (1) nach einem der Ansprüche 1 bis 11, wobei der erste Endabschnitt (21) einen Kopf des Klemmkörpers (2) definiert, der am Schaft (23) befestigt ist, wobei das Abdeckelement (4) entfernbar an dem Kopf befestigbar ist.

13. Klemmelement (1) nach einem der Ansprüche 1 bis 12, wobei die Stromversorgungsmittel (44) eine Batterie und/oder einen Verbinder für ein Stromkabel umfassen.

14. Klemmelement (1) nach einem der Ansprüche 1 bis 13, wobei das Kommunikationsmodul (42) ein drahtloses Kommunikationsmodul und/oder einen Verbinder für ein Datenübertragungskabel umfasst.

15. Überwachungssystem (100) zum Überwachen einer physikalischen Größe eines Klemmelements (1), umfassend:
- ein oder mehrere Klemmelemente (1) nach einem der Ansprüche 1 bis 14, und
- einen Prozessor (101), der in Signalverbindung mit den Kommunikationsmodulen (42) jedes Klemmelements (1) steht, wobei der Prozessor konfiguriert ist, um die physikalische Größe oder eine davon abgeleitete Größe oder eine aus einer Kombination aller gemessenen Größen abgeleitete Größe einem Benutzer zur Verfügung zu stellen.

## Revendications

1. Élément de serrage (1), comprenant :
- un corps de serrage (2) formé en une pièce unique, le corps de serrage (2) ayant :
- une première partie d'extrémité (21) avec une première surface de base (24) plate,
- une seconde partie d'extrémité (22) espacée de la première partie d'extrémité (21) le long d'une direction longitudinale (X-X), ayant une seconde surface de base (25) plate et parallèle à la première surface de base (24),
- une tige (23), qui s'étend principalement le long de ladite direction longitudinale (X-X) entre les première et secondes parties d'extrémité (21, 22),
- un module de mesure (3) fixé à la première surface de base (24), et comprenant un capteur à ultrasons (31) configuré pour générer, transmettre et collecter des ultrasons se déplaçant à travers la tige (23) entre les première et seconde surfaces de base (24, 25) pour mesurer une première quantité physique dudit élément de serrage (1),
**caractérisé en ce qu'il comprend** un élément de couverture (4) conçu pour être fixé de manière amovible au module de mesure (3) et/ou à la première partie d'extrémité (21), l'élément de couverture (4) comprenant :
- un module de communication (42), en communication de signal avec ledit module de mesure (3), configuré pour transmettre ladite première quantité physique à un dispositif externe, qui est externe audit élément de serrage (1),
- un microcontrôleur (43) en communication de signal avec ledit module de mesure (3) et avec ledit module de communication (42) pour commander le fonctionnement dudit capteur à ultrasons (3) et dudit module de communication (42),
- des moyens d'alimentation en puissance (44) permettant d'alimenter en puissance le capteur à ultrasons (3), le module de communication (42) et le microcontrôleur (43).

2. Élément de serrage (1) selon la revendication 1, comprenant des premier et second éléments de contact (51, 52), contenus en partie dans le module de mesure (3) et en partie dans l'élément de couverture (4), lesquels sont en contact électrique l'un avec l'autre lorsque l'élément de couverture (4) est fixé à ladite première partie d'extrémité (21), et sont séparés l'un de l'autre lorsque l'élément de couverture (4) est retiré de la première partie d'extrémité (21), dans lequel :
- les premiers éléments de contact (51) comprennent au moins un tracé conducteur, et
- les seconds éléments de contact (52) comprennent au moins une broche permettant de venir en contact avec le tracé conducteur, indépendamment d'un angle d'orientation circonférentielle de l'élément de couverture (4) par rapport au corps de serrage (2).

3. Élément de serrage (1) selon la revendication 2, dans lequel les premiers éléments de contact (51) comprennent une pluralité de tracés conducteurs concentriques, radialement espacés, et les seconds éléments de contact (52) comprennent une pluralité de broches, agencées dans des positions radiales correspondant aux tracés conducteurs permettant de venir en contact chacune avec un tracé conducteur différent, indépendamment d'un angle d'orientation circonférentielle de l'élément de couverture (4) par rapport au corps de serrage (2).

4. Élément de serrage (1) selon l'une quelconque des revendications 1 à 3, dans lequel :
ledit module de mesure (3) comprend une première unité de mémoire (34) configurée pour stocker des données d'identification et/ou des paramètres spécifiques du corps de serrage (2), et
- ledit élément de couverture (4) comprend une seconde unité de mémoire (48) en communication avec ledit microcontrôleur (43).

5. Élément de serrage (1) selon la revendication 4, dans lequel lesdits paramètres spécifiques du corps de serrage (2) stockés dans la première unité de mémoire (34) comprennent des données d'étalonnage conçues pour déterminer une pluralité de forces de serrage agissant sur le corps de serrage (2) en fonction d'une pluralité de valeurs de ladite première quantité physique.

6. Élément de serrage (1) selon l'une quelconque des revendications 1 à 5, dans lequel ladite première quantité physique comprend un temps de vol d'ultrasons entre les première et seconde surfaces de base (24, 25), et/ou un allongement du corps de serrage (2), et/ou une force de serrage agissant sur le corps de serrage (2).

7. Élément de serrage (1) selon l'une quelconque des revendications 1 à 6, dans lequel ledit module de mesure (3) comprend un capteur de température (34) faisant face vers le corps de serrage (2) permettant de mesurer la température du corps de serrage (2).

8. Élément de serrage (1) selon l'une quelconque des revendications 1 à 7, dans lequel l'élément de couverture (4) comprend un ou plusieurs capteurs supplémentaires (45a, 45b) configurés pour détecter au moins une seconde quantité physique de l'élément de serrage (1), comportant de préférence au moins l'un parmi température, position, état vibratoire et inclinaison.

9. Élément de serrage (1) selon l'une quelconque des revendications 1 à 8, dans lequel l'élément de couverture (4) comprend une enceinte (41) qui peut être fixée de manière amovible au module de mesure (3) et/ou à la première partie d'extrémité (21) du corps de serrage (2), dans lequel le module de communication (42), le microcontrôleur (43), les moyens d'alimentation en puissance (44) et les capteurs supplémentaires (45a, 45b) facultatifs sont au moins partiellement enfermés dans l'enceinte (41).

10. Élément de serrage (1) selon la revendication 9, dans lequel l'enceinte (41) comprend une enveloppe (41a), ayant une ouverture permettant d'accéder au moins aux moyens d'alimentation en puissance (44), et un couvercle mobile (41c) permettant d'ouvrir et de fermer l'ouverture de l'enveloppe (41a).

11. Élément de serrage (1) selon l'une quelconque des revendications 1 à 10, dans lequel le capteur à ultrasons (31) est en contact de surface avec la première surface de base (24), de préférence collé à la première surface de base (24).

12. Élément de serrage (1) selon l'une quelconque des revendications 1 à 11, dans lequel la première partie d'extrémité (21) définit une tête du corps de serrage (2), fixée à la tige (23), l'élément de couverture (4) pouvant être fixé de manière amovible à ladite tête.

13. Élément de serrage (1) selon l'une quelconque des revendications 1 à 12, dans lequel lesdits moyens d'alimentation en puissance (44) comprennent une batterie et/ou un connecteur pour un câble de puissance.

14. Élément de serrage (1) selon l'une quelconque des revendications 1 à 13, dans lequel ledit module de communication (42) comprend un module de communication sans fil et/ou un connecteur pour un câble de transmission de données.

15. Système de surveillance (100) permettant de surveiller une quantité physique d'un élément de serrage (1) comprenant :
- un ou plusieurs éléments de serrage (1) selon l'une quelconque des revendications 1 à 14, et
- un processeur (101) en communication de signal avec les modules de communication (42) de chaque élément de serrage (1), ledit processeur étant configuré pour mettre ladite quantité physique, ou quantité dérivée de celle-ci, ou dérivée d'une combinaison de toutes les quantités mesurées, à la disposition d'un utilisateur.
